(19) Europäisches Patentamt
European Patent Office
Office européen des brevets

(11) Veröffentlichungsnummer : **0 350 630 B1**

# (12) EUROPÄISCHE PATENTSCHRIFT

(45) Veröffentlichungstag der Patentschrift : **19.08.92 Patentblatt 92/34**

(51) Int. Cl.[5] : **C07F 9/30,** C07F 9/32

(21) Anmeldenummer : **89110679.1**

(22) Anmeldetag : **13.06.89**

## (54) Verfahren zur Herstellung von N-Acyl-phosphinothricin-P-ester.

(30) Priorität : **14.07.88 DE 3823886**
**08.03.89 DE 3907439**

(43) Veröffentlichungstag der Anmeldung : **17.01.90 Patentblatt 90/03**

(45) Bekanntmachung des Hinweises auf die Patenterteilung : **19.08.92 Patentblatt 92/34**

(84) Benannte Vertragsstaaten : **AT BE CH DE ES FR GB IT LI NL**

(56) Entgegenhaltungen :
**EP-A- 292 918**
**EP-A- 0 009 022**
**EP-A- 0 018 415**
**DE-A- 2 115 985**
**CHEMICAL COMMUNICATION, 041091, Seite 1540; H WAKAMATSU et al.: "Synthesis of N-Acyl Amino-acids by a Carbonylation Reaction"**

(73) Patentinhaber : **HOECHST AKTIENGESELLSCHAFT**
**Postfach 80 03 20**
**W-6230 Frankfurt am Main 80 (DE)**

(72) Erfinder : **Jägers, Erhard, Dr.**
**Hemberger Strasse 75**
**W-5303 Bornheim (DE)**
Erfinder : **Böhshar, Manfred, Dr.**
**Im Förstergrund 14**
**W-6233 Kelkheim (DE)**
Erfinder : **Kleiner, Hanss-Jerg, Dr.**
**Altkönigstrasse 11a**
**W-6242 Kronberg (DE)**
Erfinder : **Erpenbach, Heinz, Dr.**
**Oberbuschweg 22**
**W-5000 Köln (DE)**
Erfinder : **Bylsma, Friedhelm**
**Theodor-Heuss-Strasse 7**
**W-5042 Erftstadt (DE)**

EP 0 350 630 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von N-Acyl-phosphinothricin-P-estern bzw. Methyl-(3-acylamino-3-carboxy-propyl)-phosphinsäureestern der Formel

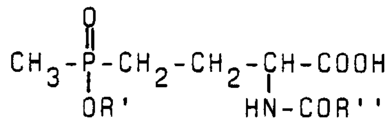

welche Zwischenprodukte für das Herbizid Phosphinothricin der Formel

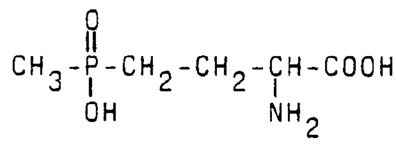

darstellen und wobei R′ für einen aliphatischen aromatischen oder araliphatischen Rest steht.

Bisherige Herstellungsverfahren für derartige Ester, die noch zusatzlich an der Carboxygruppe verestert sein können, basieren auf der Umsetzung von Methanphosphonigsäureestern mit Vinylessigsäureestern in Gegenwart von Radikal-Startern oder unter Bestrahlung mit UV-Licht (vergl. EP-OS 0 018 415), sowie auf einer Strecker-Synthese mit Methyl-(3-oxo-propyl)-phosphinsäureestern (vergl. US-PS 4 264 532).

Die Umsetzung bestimmter Aldehyde oder aldehydbildender Substanzen mit einem Carbonsäureamid und Kohlenmonoxid in Gegenwart von Wasserstoffgas und einer Cobaltverbindung als Katalysator ist bereits in allgemeiner Form beschrieben worden (vergl. H. Wakamatsu et al. in CHEMICAL COMMUNICATIONS, 1971, Seite 1540):

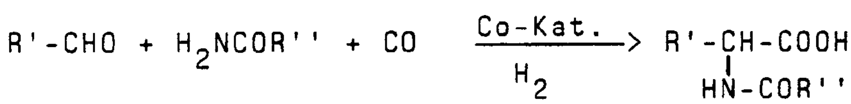


Überraschenderweise wurde nun gefunden, daß dieser Reaktion auch ein eine Phosphinsäureestergruppe enthaltender Aldehyd vom Typ der Methyl-(3-oxo-propyl)-phosphinsäureester unterworfen werden kann:

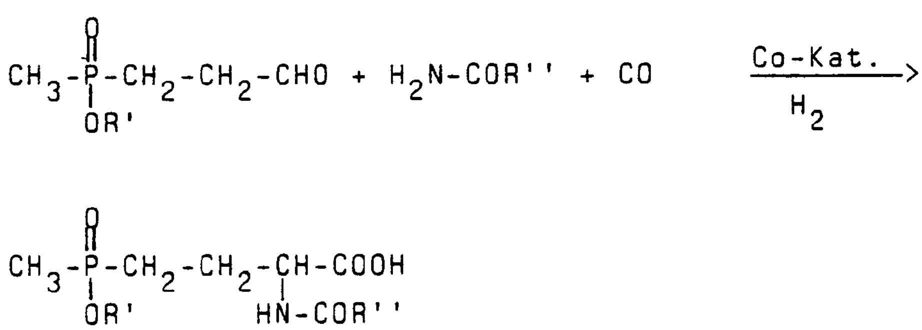


Im einzelnen ist das Verfahren der Erfindung zur Herstellung von N-Acylphosphinothricin-P-estern dadurch gekennzeichnet, daß man einen Methyl-(3-oxo-propyl)phosphinsäureester mit einem Carbonsäureamid und Kohlenmonoxid in Gegenwart von Wasserstoffgas unter Einsatz einer Cobaltverbindung als Katalysator in einem dipolaren aprotischen Lösemittel umsetzt, wobei der Rest R′ Alkyl oder Aryl oder Aralkyl ist.

Dabei kann beim Methyl-(3-oxo-propyl)phosphinsäureester der Rest R′ bis zu 10, vorzugsweise 4 bis 10, insbesondere 5 bis 8 Kohlenstoffatome aufweisen, wobei der Rest R′ gegebenenfalls halogensubstituiert sein kann.

Als Carbonsäureamide können Amide von aliphatischen, aromatischen oder araliphatischen Carbonsäuren (R″) eingesetzt werden.

Die Umsetzung erfolgt mit Cobaltverbindungen als Katalysator, beispielsweise mit Acetaten, Chloriden, Hydroxiden oder Acetylacetonaten des Cobalts, wobei jedoch Di-cobalt-octa-carbonyl, $Co_2(CO)_8$, bevorzugt eingesetzt wird.

Als dipolare aprotische Lösemittel sind bevorzugt einsetzbar: Dioxan, Tetrahydrofuran, Dibutylether, Ethylenglykoldimethylether, Essigsäureethylester, Acetonitril, Sulfolan, N-Methylpyrrolidon oder N,N-Dimethylacetamid.

Die Reaktion kann bei Drucken von 40 bis 200 bar, vorzugsweise bei 80 bis 150 bar, und bei Temperaturen von 20 bis 160°C, vorzugsweise bei 80 bis 140°C, durchgeführt werden.

Es werden $CO/H_2$-Gasgemische eingesetzt, die bevorzugt 10 bis 40 Vol% Wasserstoff enthalten.

Aus dem N-acylierten und P-veresterten Zwischenprodukt kann das Phosphinothricin in an sich bekannter Weise durch Umsetzung mit wäßriger Säure, vorzugsweise 6 n Salzsäure, gewonnen werden.

Methyl-(3-oxo-propyl)-phosphinsäureester, bei denen die an das Phosphoratom gebundene OR′-Gruppe mehr als 3 Kohlenstoffatome aufweist, lassen sich in besserer Ausbeute zum N-Acyl-phosphinothricin-P-ester umsetzen. Darüberhinaus sind Methyl-(3-oxo-propyl)-phosphinsäureester mit 4 bis 10 Kohlenstoffatomen in der an das Phosphoratom gebundenen OR′-Gruppe in einfacher Weise herstellbar, beispielsweise nach dem Verfahren gemäß der älteren, nicht vorveröffentlichten deutschen Patentanmeldung P 39 00 331.0.

Beispiel 1:

10,3 g Methyl(3-oxo-propyl)-phosphinsäure-ethylester, 4,13 g Acetamid, 70 ml 1,4-Dioxan und 0,42 g $Co_2(CO)_8$ wer den in einem 150-ml-Autoklaven mit 120 bar $CO/H_2$ im Volumenverhältnis 3 : 1 bei 120°C umgesetzt. Nach einer Reaktionszeit von 60 min wird das Gemisch mittels Hochdruckflüssigchromatographie (HPLC) analysiert. Man findet 7,2 g N-Acetyl-phosphinothricin-P-ethylester; dies entspricht einer Ausbeute von 45,7 %.

Beispiel 2:

10,3 g Methyl-(3-oxo-propyl)-phosphinsäure-ethylester, 9,46 g Phenylessigsäureamid, 70 ml 1,4-Dioxan und 0,42 g $Co_2(CO)_8$ werden in einem 150-ml-Autoklaven mit 120 bar $CO/H_2$ im Volumenverhältnis 3 : 1 bei 120°C umgesetzt. Nach einer Reaktionszeit von 60 min wird das Gemisch mittels HPLC analysiert. Man findet 8,70 g N-Phenylacetyl-phosphinothricin-P-ethylester; dies entspricht einer Ausbeute von 42,3 %.

In den folgenden Beispielen 3 bis 11 wurden jeweils 70 mmol Methyl-(3-oxo-propyl)phosphinsäureester mit 70 mmol Acetamid in 70 ml Essigsäureethylester in Anwesenheit von 1,23 mmol Dicobaltoctacarbonyl (entsprechend 2,46 mmol Cobalt) mit einem $CO/H_2$-Gemisch im Volumenverhältnis 3:1 in einem Autoklaven bei 120°C und 120 bar zur Reaktion gebracht. Nach einer Reaktionszeit von 60 Minuten wurde der Autoklav entspannt und das Reaktionsgemisch mittels Hochdruckflüssigchromatographie (HPLC) analysiert und damit die Ausbeute an N-Acetyl-phosphinothricin-P-ester bestimmt.

| Beispiel | R' | Ausbeute [%] |
|---|---|---|
| 3 | Ethyl | 45 |
| 4 | iso-Propyl | 40 |
| 5 | n-Butyl | 70 |
| 6 | iso-Butyl | 65 |
| 7 | n-Pentyl | 51 |
| 8 | 2-Methyl-butyl | 62 |
| 9 | iso-Pentyl | 58 |
| 10 | n-Hexyl | 59 |
| 11 | 2-Ethyl-hexyl | 70 |

## Patentansprüche

1. Verfahren zur Herstellung von N-Acyl-phosphinothricin-P-estern, dadurch gekennzeichnet, daß man einen Methyl-(3-oxo-propyl)phosphinsäureester der Formel

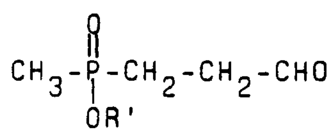

mit einem Carbonsäureamid und Kohlenmonoxid in Gegenwart von Wasserstoffgas unter Einsatz einer Cobaltverbindung als Katalysator in einem dipolaren aprotischen Lösemittel umsetzt, wobei der Rest R′ Alkyl oder Aryl oder Aralkyl ist.

2. Verfahren nach Anspruch 1, dadurch gekennzeichnet, daß beim Methyl-(3-oxo-propyl)phosphinsäureester der Rest R′ bis zu 3 Kohlenstoffatome aufweist.

3. Verfahren nach Anspruch 1, dadurch gekennzeichnet, daß beim Methyl-(3-oxo-propyl)phosphinsäureester der Rest R′ 4 bis 10, vorzugsweise 5 bis 8 Kohlenstoffatome aufweist.

## Revendications

1. Procédé pour la fabrication de P-esters de N-acylphosphinothricines, caractérisé en ce que l'on fait réagir un ester d'acide méthyl-(3-oxo-propyl)phosphinique de formule :

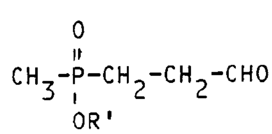

avec un amide d'acide carboxylique et le monoxyde de carbone en présence d'hydrogène en utilisant un composé de cobalt comme catalyseur dans un solvant aprotique dipolaire, le reste R′ étant un groupe alkyle

ou aryle ou arylalkyle.

2. Procédé selon la revendication 1, caractérisé en ce que le reste R′ dans l'ester d'acide méthyl-(3-oxopropyl)phosphinique contient jusqu'à 3 atomes de carbone.

3. Procédé selon la revendication 1, caractérisé en ce que le reste R′ dans l'ester d'acide méthyl-(3-oxopropyl)phosphinique contient 4 à 10 atomes de carbone, de préférence 5 à 8 atomes de carbone.

## Claims

1. A process for the preparation of N-acylphosphinothricin P-esters, which comprises reacting a methyl(3-oxopropyl)phosphinic acid ester of the formula

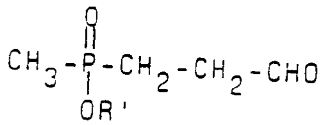

with a carboxamide and carbon monoxide in the presence of hydrogen gas using a cobalt compound as catalyst in a dipolar aprotic solvent, the radical R′ being alkyl or aryl or aralkyl.

2. The process as claimed in claim 1, wherein the radical R′ in the methyl(3-oxopropyl)phosphinic acid ester has up to 3 carbon atoms.

3. The process as claimed in claim 1, wherein the radical R′ in the methyl(3-oxopropyl)phosphinic acid ester has 4 to 10, preferably 5 to 8, carbon atoms.